# EUROPÄISCHE PATENTSCHRIFT

(11) **EP 0 427 664 B1**
(45) Veröffentlichungstag und Bekanntmachung des Hinweises auf die Patenterteilung: **15.09.1993**
(21) Anmeldenummer: 90810774.1
(22) Anmeldetag: 09.10.1990
(51) Int. Cl.: B25B 31/00

(54) **Setzvorrichtung für Dübel**
Device for placing dowels
Dispositif pour la mise en place de goujons

(30) Priorität: 10.11.1989 DE 3937417
(43) Veröffentlichungstag der Anmeldung: 15.05.1991
(73) Patentinhaber: HILTI Aktiengesellschaft, 9494 Schaan (LI)
(72) Erfinder: Popp, Franz, W-8939 Buchloe (DE)
(74) Vertreter: Wildi, Roland

(56) Entgegenhaltungen:
- EP-A- 0 210 127
- DE-A- 2 935 964
- GB-A- 667 819

## Beschreibung

Die Erfindung betrifft eine Vorrichtung zum Setzen von Spreizhülse und Ankerstange mit Spreizkörper aufweinenden Ankern, mit einem sich in axialer Richtung an der Spreizhülse abstützenden Gehäuse und einer mit der Ankerstange über ein Gewinde verbindbaren, gegenüber dem Gehäuse verdrehbar gelagerten, Angriffsmittel zum Verdrehen aufweinenden Muffe.

In der rissgefährdeten Zugzone von Bauteilen kommen aus Sicherheitsgründen sogenannte Hinterschnittanker zur Anwendung. Solche Hinterschnittanker zeichnen sich durch eine formschlüssige Verbindung mit dem Bauteil aus, so dass auch bei einem sich durch Risse öffnenden Bohrloch der volle Verankerungswert erhalten bleibt.

Ein den vorgenannten Erfordernissen gerechtwerdender Anker ist beispielsweise aus der EU-A-0 226 524 bekannt. Um mit diesem Anker den vollen Verankerungswert zu erreichen, ist eine Vorspannung erforderlich. Aufgrund dieser Vorspannung, welche mittels einer geeigneten Vorrichtung erreicht wird, gelangen Segmente der Spreizhülse in den hinterschnittenen Bereich des Bohrloches.

Die aus der EU-A-0 226 524 bekannte Vorrichtung zum Vorspannen von Hinterschnittankern weist innbesondere den Nachteil auf, dass das Gewinde der Ankerstange für den Vorspannvorgang verwendet werden muss. Somit unterliegt dieses Gewinde bereits beim Vorspannen einet grossen Beanspruchung, welche unter Umständen zu Beschädigungen führen kann. Darüber hinaus müssen aufgrund der üblichen Steigung eines solchen Gewindes für den Vorspannvorgang ausserordentlich hohe Drehmomente aufgebracht werden.

Die aus einem gattungsfremden Gebiet stammende GB-PS 667 819 zeigt eine Vorrichtung zum Verformen von Nieten mit einem sich in axialer Richtung an der Niete abstützenden Gehäuse und einer gegenüber dem Gehäuse verdrehbar gelagerten Muffe. Die Muffe weist eine Hülse und eine über eine Gewindeverbindung mit der Hülse verbundene Büchse auf.

Die Hülse sowie die Büchse besitzen Dreh-Angriffsmittel, die dem besetzen von entsprechenden Werkzeugen dienen. Die Büchse steht mit einer Zugstange in Form einer Sechskantschraube in Verbindung, die ausserhalb der Vorrichtung mit dem Innengewinde einer umzuformenden Niete in Verbindung bringbar ist. Diese bekannte Vorrichtung ist für keine so grossen Umformkräfte vorgesehen, wie sie für das Setzen von Setzankern notwendig sind.

Der Erfindung liegt die Aufgabe zugrunde, eine Vorrichtung zum Setzen von Ankern zu schaffen, die den Anker schont und ein Vorspreizen mit relativ geringem Kraftaufwand ermöglicht.

Gemäss der Erfindung wird dies dadurch erreicht, dass die Muffe eine die Angriffsmittel tragende Hülse und eine über eine als Feingewinde ausgebildete Gewindeverbindung mit der Hülse verbundene Büchse, welche das Gewinde trägt, aufweist.

Die Muffe ist somit zweiteiligaungebildet und besteht aus der mit der Ankerstange verbindbaren Büchse und der über die Gewindeverbindung damit verbundenen Hülse. Das Gewinde zwischen der Büchse und der Ankerstange ist stationär, dh es erfolgt bei Setzvorgang keine Relativbewegung zwischen der Büchse und der Ankerstange. Für die Relativbewegung der Ankerstange gegenüber der Spteizhülse dient die Gewindeverbindung zwischen der Büchse und der Hülse. Diese Gewindeverbindung ist auf diese Anwendung optimiert und als Feingewinde ausgebildet. Zur Reduzierung der Reibungsverluste kann eine besonders günstige Materialpaarung, wie beispielsweise Stahl und Bronze, gewählt werden.

Insbesondere in der Endphase des Setzvorgangs ist ein relativ hoher Kraftaufwand erforderlich. Ein Feingewinde weist gegenüber einem sogenannten Normalgewinde eine geringere Steigung und somit einen kleineren Steigungswinkel auf. Die daraus resultierende Uebersetzung ist dadurch grösser als bei einem sogenannten Normal- oder Regelgewinde.

Die Steigung des Feingewindes beträgt zweckmässigerweise etwa 1 bis 3 mm. Dabei gilt eine Steigung von 1 mm beispielsweise für ein Gewinde mit einem Nenndurchmesser von 8 mm. Ein genormtes Feingewinde mit 3 mm Steigung weist einen Nenndurchmesser von wenigstens 36 mm auf.

Die Hülse ist vorteilhaft als äusseres Teil und die Büchse als inneres, über das Gewinde mit der Ankerstange verbindbares Teil ausgebildet. Die Hülse weist eine durchgehende Bohrung auf und die Büchse ist mit einem dem Gewinde der Ankerstange entsprechenden Sacklochgewinde versehen.

Beim Setzvorgang wird zunächst die Setzvorrichtung auf das Gewinde der Ankerstange aufgeschraubt. Es ist daher zweckmässig, dass die Büchse das der Setzrichtung entgegengesetzte, rückwärtige Ende der Hülse axial überragt. Das die Hülse rückwärtig überragende Teil der Büchse ist von aussen deutlich sichtbar und gibt Auskunft über den Setzzustand des zu setzenden Ankers.

Beim Setzvorgang wird die Büchse auf die Ankerstange aufgeschraubt. Zu diesem Zweck ist es vorteilhaft, dass das die Hülse axial überragende Teil der Büchse Drehmitnahmemittel aufweist. Diese Drehmitnahmemittel können beispielsweise als zum Angriff eines Gabelschlüssels dienende Anflachungen oder Innen- bzw Aussenmehrkant ausgebildet werden.

Beim Setzvorgang erfolgt nach dem Aufschrauben der Büchse auf die Ankerstange eine Relativverdrehung zwischen der Büchse und der Hülse. Ueber die Gewindeverbindung zwischen der Büchse und der Hülse erfolgt dabei eine Relativverschiebung der Büchse gegenüber der Hülse. Um den Setzzustand des Ankers von aussen zu erkennen, ist es daher vorteilhaft, dass der rückwärtige Endbereich der Büchse wechselweise die Endlagen signalisierende Markierungen aufweist. Diese Markierungen können beispielsweise als Einstiche oder Farbringe ausgebildet werden. Beispielsweise kann zu Beginn des Spreizvorganges ein grüner Ring sichtbar sein und bei Erreichen des vorgesehenen Spreizzustandes ein roter Ring sichtbar werden. Der axiale Spreizweg besteht dabei in der Distanz zwischen dem roten Ring und dem grünen Ring.

Die Erfindung soll nachstehend, anhand der sie beispielsweise wiedergebenden Zeichnungen, näher erläutert werden.

Es zeigen:
- Fig. 1: eine erfindungsgemässe Vorrichtung zu Beginn des Setzvorganges;
- Fig. 2: die Vorrichtung gemäss Fig. 1 nach erfolgter Setzung des Ankers.

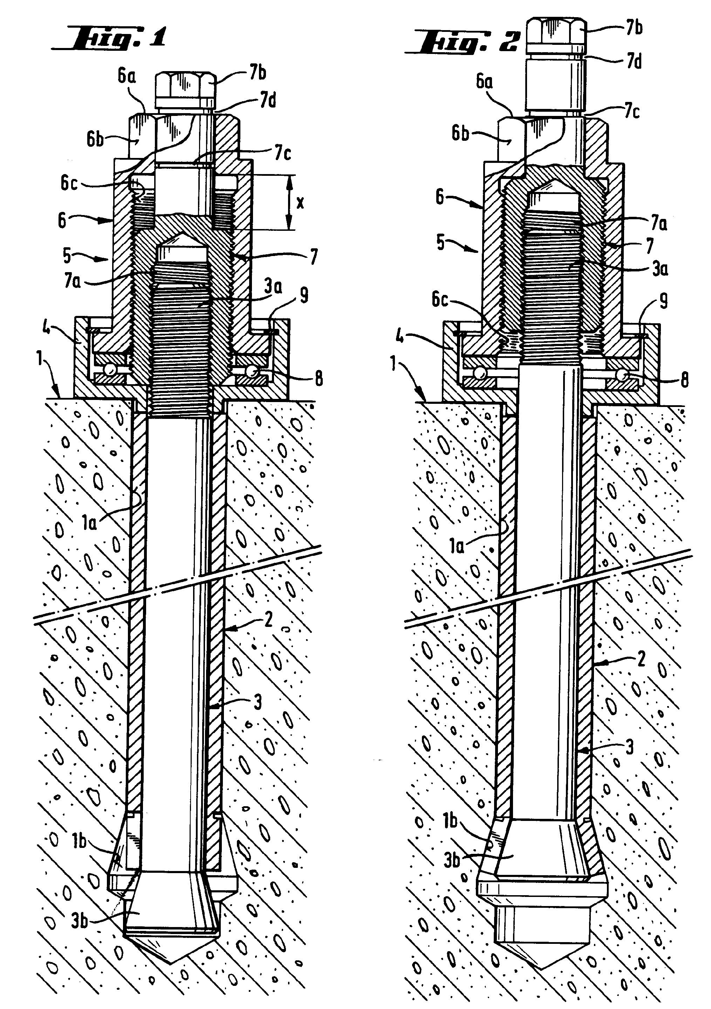

Die aus Fig. 1 und 2 ersichtliche Vorrichtung dient zum Setzen eines Ankers in einem Bohrloch 1a eines Bauteiles 1. Der Anker besteht im wesentlichen aus einer Spreizhülse 2 und einer diese axial durchsetzenden, das rückwärtige Ende der Spreizhülse 2 überragenden Ankerstange 3. Die Ankerstange 3 weist in ihrem rückwärtigen Endbereich ein Gewinde 3a und an ihrem vorderen Ende einen Spreizkörper 3b auf. Die Setzvorrichtung besteht im wesentlichen aus einem Gehäuse 4 und einer darin drehbar gelagerten Muffe 5. Die Muffe 5 ihrerseits besteht aus einer Hülse 6 und einer Büchse 7. Die Hülse 6 weist an ihrem rückwärtigen Ende 6a Angriffsmittel 6b zum Verdrehen der Hülse 6 auf. Die Bohrung der Hülse 6 ist mit einem Feingewinde 6c versehen. Die Büchse 7 steht über das Feingewinde 6c mit der Hülse 6 in Verbindung. Die Büchse 7 weist in einer Sacklochbohrung ein Gewinde 7a auf und ist an ihrem rückwärtigen Ende mit Drehmitnahmemitteln 7b versehen. Die Büchse 7 ist über das Gewinde 7a mit der Ankerstange 3 verbunden. Der rückwärtige, die Hülse 6 überragende Endbereich der Büchse 7 ist mit Markierungen 7c, 7d versehen. Die Hülse 6 ist über ein Axiallager 8 am Gehäuse 4 abgestützt. Ein Sicherungsring 9 sichert die Verbindung zwischen dem Gehäuse 4 und der Muffe 5, bzw. der Hülse 6.

In der in Fig. 1 dargestellten Ausgangslage ist die Büchse 7 soweit auf die Ankerstange 3 aufgeschraubt, bis das Gehäuse 4 am rückwärtigen Ende der Spreizhülse 2 zur Anlage kommt. Anschliessend sind die Setzvorrichtung zusammen mit dem Anker bis zu dem mit einem Hinterschnitt 1b versehenen Grund in das Bohrloch 1a des Aufnahmematerials 1 eingeführt worden. Zum Aufschrauben der Büchse 7 auf das Gewinde 3a der Ankerstange 3 dienen die Drehmitnahmemittel 7b am rückwärtigen Ende der Büchse 7. Anschliessend wird die Hülse 6 mittels der Angriffsmittel 6b gegenüber der Ankerstange 3, dem Gehäuse 4 und der Büchse 7 verdreht. Ueber das Feingewinde 6c erfolgt dabei eine Axialverschiebung der Büchse 7 gegenüber dem Gehäuse 4, bzw der Ankerstange 3 gegenüber der Spreizhülse 2. Die Büchse 7 kann gegenüber der Hülse 6 maximal um das Verschiebemass x in axialer Richtung verschoben werden. Dieses Mass x ergibt den maximal möglichen Vorspreizweg.

In der in Fig. 2 dargestellten Endlage ist die Büchse 7 gegenüber der Hülse 6 um das Mass x verschoben worden bis die Büchse 7 an der Hülse 6 zur Anlage gelangt ist. Von aussen ist dies dadurch erkennbar, dass die Markierung 7c am rückwärtigen Ende der Hülse 6 sichtbar wird. Die Markierungen 7c, 7d können zur besseren Erkennbarkeit auch farbig ausgelegt werden. Nachdem der in Fig. 2 dargestellte Endzustand erreicht und der Anker somit formschlüssig im Hinterschnitt verankert ist, wird die Büchse 7 mittels der Drehmitnahmemittel 7b wiederum von der Ankerstange 3 abgeschraubt. Die Setzvorrichtung kann sodann entfernt und eine zu befestigende Last aufgebracht werden.

## Patentansprüche

1. Vorrichtung zum Setzen von Spreizhülse (2) und Ankerstange (3) mit Spreizkörper (3b) aufweisenden Ankern, mit einem sich in axialer Richtung an der Spreizhülse (2) abstützenden Gehäuse (4) und einer mit der Ankerstange (3) über ein Gewinde (3a) verbindbaren, gegenüber dem Gehäuse (4) verdrehbar gelagerten, Angriffsmittel (6b) zum Verdrehen aufweisenden Muffe (5), **dadurch gekennzeichnet,** dass die Muffe (5) eine die Angriffsmittel (6b) tragende Hülse (6) und eine über eine als Feingewinde ausgebildete Gewindeverbindung (6c) mit der Hülse (6) verbundenen Büchse (7), welche das Gewinde (7a) trägt, aufweist.

2. Vorrichtung nach Anspruch 1, dadurch gekennzeichnet, dass die Steigung des Feingewindes (6c) 1 bis 3 mm beträgt.

3. Vorrichtung nach Anspruch 1 oder 2, dadurch gekennzeichnet, dass die Hülse (6) als äusseres Teil und die Büchse (7) als von der Hülse (6) konzentrisch umgebenes, inneres Teil ausgebildet ist.

4. Vorrichtung nach einem der Ansprüche 1 bis 3, dadurch gekennzeichnet, dass die Büchse (7) das der Setzrichtung entgegengesetzte, rückwärtige Ende (6a) der Hülse (6) axial überragt.

5. Vorrichtung nach Anspruch 4, dadurch gekennzeichnet, dass das die Hülse (6) axial überragende Teil der Büchse (7) Drehmitnahmemittel (7b) aufweist.

6. Vorrichtung nach einem der Ansprüche 1 bis 5, dadurch gekennzeichnet, dass der rückwärtige Endbereich der Büchse (7) wechselweise die Endlagen signalisierende Markierungen (7c, 7d) aufweist.

## Claims

1. Setting device for an expansion sleeve (2) and anchoring rod (3) with anchors comprising expanding elements (3b), with a housing (4) which is supported in the axial direction against the expansion sleeve (2), and a sleeve (5), which is connectable via a thread (3a) to the anchoring rod (3) and which is mounted to be rotatable relative to the housing (4) and which comprises engaging means (6b) to allow rotation, **characterised in that** the sleeve (5) comprises a sleeve (b) carrying the engaging means (6b), and a bushing (7), which is connected to the sleeve (b) by a fine-threaded connector (6c) and which holds the thread (7a).

2. Device according to claim 1, **characterised in** that the incline of the fine thread (6c) is between 1 and 3 mm.

3. Device according to claim 1 or 2, **characterised in that** the sleeve (b) is arranged as an external part, and the bushing (7) is arranged as an internal part which is surrounded by the sleeve (6).

4. Device according to one of claims 1 to 3, **characterised in that** the bushing (7) axially extends beyond the rearward end (6a) of the sleeve (6) which is opposite to the setting direction.

5. Device according to claim 4, **characterised in that** the portion of the bushing (7) which axially extends beyond the sleeve (6) comprises rotational pickup means.

6. Device according to one of claims 1 to 5, **characterised in that** the rear end region of the bushing (7) comprises markings which alternately signal the end positions.

## Revendications

1. Dispositif pour la pose de boulons d'ancrage avec douille à expansion (2) et tige d'ancrage (3) munie d'un élément d'écartement (3b), comprenant un boîtier (4) qui s'appuie axialement sur la douille à expansion (2) et un manchon (5) pouvant être solidarisé avec la tige d'ancrage (3) par l'intermédiaire d'un filetage (3a), tourné par rapport au boîtier (4) et présentant des moyens d'attaque (6b) pour la rotation, **caractérisé en ce** que le manchon (5) comporte une douille (6) portant les moyens d'attaque (6b), et une douille (7) couplée avec la douille (6) par l'intermédiaire d'un filetage (6c) conformé en filetage à pas fin, qui porte le filetage (7a).

2. Dispositif selon la revendication 1, caractérisé en ce que le pas du filetage à pas fin (6c) est de 1 à 3 mm.

3. Dispositif selon l'une des revendications 1 ou 2, caractérisé en ce que la douille (6) est conformée en élément extérieur et la douille (7), en élément intérieur entouré concentriquement par la douille (6).

4. Dispositif selon l'une des revendications 1 à 3, caractérisé en ce que la douille (7) dépasse axialement de l'extrémité postérieure (6a) de la douille (6) opposée à la direction de pose.

5. Dispositif selon la revendication 4, caractérisé en ce que la partie de la douille (7) qui dépasse axialement de la douille (6) comporte des moyens (7b) pour l'entraînement en rotation.

6. Dispositif selon l'une des revendications 1 à 5, caractérisé en ce que la section terminale postérieure de la douille (7) présente des marquages (7c, 7d) qui signalent alternativement les positions de fin de course.
